# EUROPEAN PATENT APPLICATION

(11) **EP 0 592 871 A1**
(43) Date of publication of application: **20.04.1994**
(21) Application number: 93115736.6
(22) Date of filing: 29.09.1993
(51) Int. Cl.: C04B 35/80, C04B 35/10, C04B 35/48, C04B 35/58, C04B 35/64

(54) **Ceramic composite material and method of manufacturing the same**

(30) Priority: 12.10.1992 JP 272802/92
(71) Applicant: SUMITOMO ELECTRIC INDUSTRIES, LIMITED, Osaka 541 (JP)
(72) Inventor: Yamakawa, Akira, c/o Itami Works of, Itami-shi, Hyogo (JP)
(74) Representative: Schieschke, Klaus, Dipl.-Ing.

(57) **Abstract**

A ceramic composite material suited for use as a structural material and as a material for cutting tools. It is made of ceramic matrix particles having an average particle diameter of not exceeding 10 µm, and 1 - 50% by weight of anisotropic crystal particles of a Ti compound dispersed in the matrix and having an average length-to-breadth ratio of two or more. With this arrangement, the strength and toughness of the ceramic material increases compared with a conventional material containing equi-axed crystal particles. By using the ceramic matrix of Al₂O₃ or Si₃N₄, the wear resistance improves, so that such a material can be used as a material for cutting tools.

## Description

This invention relates to ceramic composite materials which are excellent in strength and reliability and can be used for a variety of applications as a structural material. Some of the materials are highly wear-resistant, so that they are especially suited for use as cutting tools.

It is known to mix various components in a ceramic material in order to improve the strength and toughness of ceramic material. For example, there is a strengthened Al₂O₃ ceramic material containing TiC particles. This material is used for cutting tools. Also known are a composite material comprising Si₃N₄ matrix and dispersed SiC whiskers and a composite material comprising Al₂O₃ matrix and dispersed TiN particles and SiC whiskers (Unexamined Japanese Patent Publication 4-149062).

Of such conventional ceramic composite materials, strength and toughness have not been improved satisfactorily by the particle dispersions. Also, whisker-dispersed ones are unsatisfactory in strength. These composite materials are especially poor in wear resistance as materials for cutting tools.

It is an object of the present invention to provide a ceramic composite material which has improved strength and toughness and has excellent wear resistance for use as cutting tools.

According to the present invention, anisotropic crystals of a titanium (Ti) compound having a length-to-breadth ratio (aspect ratio) of two or more in the average are dispersed in ceramic matrix particles having an average particle diameter of 10 µm or less.

The ceramic matrix as a base is composed of particles of Al₂O₃, ZrO₂, Si₃N₄, AlN or a mixture thereof. For use as a material for a cutting tool, Al₂O₃ or Si₃N₄ is especially preferable.

The Ti compound dispersed in the matrix should be selected from among TiN, TiC, TiCN or their solid solutions. Those having an average breadth equal to or shorter than the particle diameter of the matrix or not more than 2.0 µm are especially preferable for good results. Different kinds of components may be mixed together and added to the matrix. But it is essential that they have a length-to-breadth ratio of two or more in the average. Preferably, they should be in the form of whiskers having a diameter not exceeding the particle diameter of the matrix or 2.0 µm and having an aspect ratio of 10 or more. MgO, Y₂O₃ or Al₂O₃ may be further added as necessary.

The present invention also provides a method of manufacturing such a ceramic composite material. In this method, a ceramic powder having an average particle diameter of not more than 2.0 µm should be used. The above-described Ti compound should be added to and dispersed uniformly in the material powder. The mixture is sintered in a non-oxidising atmosphere while restraining the growth of the particles of Ti compound by controlling the heating temperature and heating time.

If the dispersed particles of Ti compound are equi-axed crystal particles, they would not act to sufficiently strengthen the ceramic matrix. According to the present invention, anisotropic crystals having a length-to-breadth ratio of two or more are dispersed in a densely packed matrix composed of ceramic particles having an average particle diameter of not more than 10 µm. Therefore, the resistance to pulling forces (anchoring effect) increases compared with the structure using equi-axed crystal particles. The fact that the anistropic crystals themselves suffer fewer defects and have high strength also contributes to increase strength and toughness.

If the content of the Ti compound is less than 1% by weight, its effect would not be sufficient. If more than 50% by weight, the strength of the material would drop. The higher the aspect ratio, the more the strength and toughness of the material increases due to the anchoring effect of the whiskers. But too high an aspect ratio or too large a particle size will make uniform dispersion more difficult.

For use as a material for cutting tools, the ceramic material as the main component should preferably be made of Al₂O₃ or Si₃N₄. This is because ZrO₂ is low in thermal conductivity and is not sufficiently resistant to thermal shocks, while AlN is not sufficiently wear-resistant. But they will offer no problem as far as the composite materials are used as structural materials.

If the material ceramic powder has a particle size of more than 2.0 µm, the composite material structure would be too coarse to be acceptable. Thus, the dispersed particles would not show their effects sufficiently. Further, if the Ti compound particles should fuse together and grow in size during sintering, the strength drop would occur. Also, oxidation of the Ti compound would hamper strong bond.

In the method of the present invention, a ceramic powder having an average particle diameter of not more than 2.0 µm is used. The material powder is sintered in a non-oxidizing atmosphere while controlling the heating temperature and time. Thus, the density of the material structure after sintering increases sufficiently. Also, the growth of particles and oxidation of the Ti compound are restrained. The material thus obtained is high in strength and toughness.

The optimum values of the sintering conditions (heating temperature and time) depend on the kinds of the ceramics and Ti compound used, the mixing ratio, the extent of mixing, and the initial particle diameters, etc. Thus, we cannot specify the optimum values. But from the Examples below, we can deduce that the preferable heating temperature is 1500 - 1900°C and the heating time is preferably around one hour. The higher the heating temperature, the shorter the heating time can be. The longer the heating time, the lower the heating temperature can be. But too high a heating temperature may cause the growth of particles due to fusion. On the other hand, too long a heating time would impair the productivity. Sintering conditions have to be determined carefully taking into these factors into consideration.

### (EXAMPLES)

We prepared mixed powders having compositions shown in Table 1. They were hot-pressed in a hot pressing furnace in nitrogen gas atmosphere at different sintering temperatures (for one hour) under a pressure of 200 kg/cm². The sintered materials thus obtained measured 50 x 50 x 4 mm. Sample pieces for bending test were cut off from them and ground to pieces measuring 3 x 4 x 35 mm. The bending strength was measured for each test piece obtained. Their fracture toughness was also measured by the SEPB method (under JIS).

We also prepared throw away inserts of SNGN 120408 measuring 12.7 x 12.7 x 4.75 mm by sintering the mixed powders under the same conditions as above. These inserts were subjected to a cutting test under the following cutting conditions and the frank wear after 30 minutes cutting test was measured for each sample.

The measurement results are shown in Table 2.

### - cutting conditions -

* material to be machined: FC25
* cutting speed: 600 m/min
* feed rate: 0.5 mm/rev
* depth of cut: 2.0 mm
* holder: FN11R-44A
* cutting oil: water-soluble

As will be apparent from these test results, the ceramic composite material according to the present invention, which is obtained by the manufacturing method according to the present invention, is high in strength and toughness and can be used in various applications as a structural material.

The material having a matrix of Al₂O₃ or Si₃N₄ has so high a wear resistance that the cutting tool made of such a material will exhibit high performance.

**Table 1**

| Sample No | Material composition | | | Sintering conditions (Temperature x time) |
|---|---|---|---|---|
| | Matrix (average particle diameter) | Dispersed particles (wt%) | Others (wt%) | |
| * 1 | Al₂O₃ (0.5µm) | TiC particles (30) | MgO (0.5) | 1700°C × 1 h |
| 2 | Al₂O₃ (0.5µm) | Tic whisker A (30) | MgO (0.5) | 1700°C × 1 h |
| 3 | Si₃N₄ (0.5µm) | TiC whisker A (30) | Y₂O₃ (5) | 1900°C × 1 h |
| 4 | AlN (0.5µm) | Tic whisker A (30) | Al₂O₃ (3) | 1800°C × 1 h |
| 5 | ZrO₂ (0.5µm) | Tic whisker A (30) | O | 1500°C × 1 h |
| * 6 | SiC (0.5µm) | TiC whisker A (30) | Y₂O₃ (5) | 1900°C × 1 h |
| 7 | Si₃N₄ (0.5µm) | TiC whisker A (15) | Y₂O₃ (5) | 1900°C × 1 h |
| 8 | Si₃N₄ (0.5µm) | TiC whisker A (2) | Y₂O₃ (5) | 1900°C × 1 h |
| * 9 | Si₃N₄ (0.5µm) | O | Y₂O₃ (5) | 1900°C × 1 h |
| 10 | Si₃N₄ (0.5µm) | TiC whisker B (30) | Y₂O₃ (5) | 1900°C × 1 h |
| 11 | Si₃N₄ (0.5µm) | TiC particles (30) | Y₂O₃ (5) | 1900°C × 1 h |
| 12 | Si₃N₄ (0.5µm) | TiN whisker (30) | Y₂O₃ (5) | 1900°C × 1 h |
| * 13 | Si₃N₄ (2.5µm) | TiN whisker (30) | Y₂O₃ (5) | 1900°C × 1 h |
| * 14 | Si₃N₄ (0.5µm) | TiN whisker (30) | Y₂O₃ (5) | 2100°C × 1 h |
| 15 | Si₃N₄ (0.5µm) | TiCN particles (30) | Y₂O₃ (5) | 1900°C × 1 h |
| · TiC whisker A Average diameter 1.0 µm, aspect ratio 15 · Tic whisker B Average diameter 1.0 µm, aspect ratio 15 · TiN whisker Average diameter 0.5 µm, aspect ratio 15 · TiC particles in No. 1 Equi-axed particles having an average diameter of 1.0 µm · TiC particles in No. 11 Average diameter 0.5 × 2.5 µm, aspect ratio 5 · TiCN particles in No. 15 Average diameter 1.0 × 5.0 µm, aspect ratio 5 | | | | |

| | | | | |
|---|---|---|---|---|
| * Sample Nos. 1, 6, 9, 13 and 14 are comparative examples. | | | | |

**Table 2**

| Sample No | Property of sintered body | | | Cutting test | |
|---|---|---|---|---|---|
| | Density (g/cc) | Bending strength (GPa) | Fracture toughness (MPa/m^{3/2}) | Amount of wear (mm) | Chipping (time until first chipping) |
| * 1 | 4.25 | 0.5 | 3.5 | - | 10 minutes |
| 2 | 4.23 | 1.2 | 6.0 | 0.25 | - * 1 |
| 3 | 3.82 | 1.3 | 8.6 | 0.20 | - |
| 4 | 3.80 | 0.8 | 4.0 | 0.70 | - |
| 5 | 5.65 | 1.5 | 10.0 | 0.55 | - |
| * 6 | 3.70 | 0.5 | 3.5 | - | 25 minutes |
| 7 | 3.50 | 1.0 | 7.5 | 0.30 | - |
| 8 | 3.30 | 0.9 | 7.0 | 0.35 | - |
| * 9 | 3.25 | 0.5 | 5.5 | 0.90 | - |
| 10 | 3.80 | 1.2 | 8.0 | 0.25 | - |
| 11 | 3.85 | 1.2 | 7.5 | 0.30 | - |
| 12 | 3.80 | 1.4 | 8.9 | 0.21 | - |
| * 13 | 3.65 | 0.5 | 3.5 | - | 15 minutes |
| * 14 | 3.55 | 0.4 | 4.0 | - | 10 minutes |
| 15 | 3.85 | 1.4 | 7.5 | 0.35 | - |

| | | | | | |
|---|---|---|---|---|---|
| * 1 - shows that no chipping was observed in 30 minutes. | | | | | |

## Claims

1. A ceramic composite material comprising a matrix of ceramic particles as a main component, said ceramic particles having an average particle diameter of not more than 10 µm, and 1 - 50% by weight of particles of a titanium compound dispersed in said matrix, said dispersed particles having an aspect ratio of two or more.

2. A ceramic composite material as claimed in claim 1 wherein said ceramic particles are of one or more materials selected from the group consisting of Al₂O₃, ZrO₂, Si₃N₄ and AlN and wherein said dispersed particles are whiskers mainly of a compound selected from the group consisting of TiN, TiC and TiCN.

3. A ceramic composite material as claimed in claim 2 wherein said whiskers have an aspect ratio of 10 or more.

4. A ceramic composite material for cutting tools, said material comprising a matrix of ceramic particles as a main component, said ceramic particles being selected from the group consisting of Al₂O₃ particles and Si₃N₄ particles and having an average particle diameter of not more than 10 µm, and 1 - 50% by weight of particles of a titanium compound dispersed in said matrix, said dispersed particles being whiskers of at least one selected from the group consisting of TiN, TiC and TiCN.

5. A method of manufacturing a ceramic composite material comprising the step of sintering in a non-oxidizing atmosphere a material comprising a ceramic powder having an average particle diameter of not more than 2.0 µm and 1 - 50% by weight of a titanium compound dispersed in said ceramic powder having an aspect ratio of two or more, while suppressing the growth of particles of titanium compound by controlling the heating temperature and the heating time.
